# EUROPÄISCHE PATENTSCHRIFT

(11) **EP 0 355 826 B1**
(45) Veröffentlichungstag und Bekanntmachung des Hinweises auf die Patenterteilung: **09.02.1994**
(21) Anmeldenummer: 89115627.5
(22) Anmeldetag: 24.08.1989
(51) Int. Cl.: C08F 283/12, C08G 77/50

(54) **Modifizierte Poly(organo-organosiloxane) mit kamm- oder blockartiger Struktur und Verfahren zu ihrer Herstellung**
Modified poly(organo-organopolysiloxanes) with a comb or block structure, and process for their preparation
Polyorganosiloxanes modifiés par des polymères organiques à structure en peigne ou en blocs et leur procédé de fabrication

(30) Priorität: 25.08.1988 DE 3828862
(43) Veröffentlichungstag der Anmeldung: 28.02.1990
(73) Patentinhaber: Wacker-Chemie GmbH, 81737 München (DE)
(72) Erfinder: Fleischmann, Gerald, Dr. Dipl.-Chem., D-8263 Burghausen (DE); Eck, Herbert, Dr. Dipl.-Chem., D-8263 Burghausen (DE); Schuster, Johann, Dr. Dipl.-Chem., D-8261 Emmerting (DE)

(56) Entgegenhaltungen:
- EP-A- 0 029 947
- DE-A- 3 904 939

## Beschreibung

Gegenstand der Erfindung sind neue modifizierte Poly[organo-organosiloxane] mit kamm- oder blockartiger Struktur, in welchen die organischen Polymere mit der Polysiloxangrundlage über Si-C-Bindungen verknüpft sind und Verfahren zu ihrer Herstellung durch Polymerisation von Organosiloxanen und polaren Verbindungen, die in α-Stellung zu einer Carbonyl- oder Nitrilgruppe eine C=C-Doppelbindung aufweisen, worunter insbesondere Acrylsäurederivate zu verstehen sind, wie Ester, Nitrile und Amide von Acrylsäure und Methacrylsäure.

Versuche, Siloxane mit organischen Polymeren unter Anwendung üblicher Polymerisationstechniken, wie radikalische Polymerisation, Polykondensation oder Polyaddition zu kombinieren, sind bekannt.

So können beispielsweise Si-enthaltende Polymere mit kammartiger Struktur, welche Organopolysiloxane als Hauptkette und Vinylpolymere als Seitenketten aufweisen, dadurch hergestellt werden, daß in einer 1. Verfahrensstufe Vinylmonomere, wie Acrylate oder Methacrylate in Gegenwart von Dialkoxysilylgruppen aufweisenden Mercaptosilanen radikalisch polymerisiert werden, unter Bildung von Makromeren (Prepolymeren), die anschließend in einer 2. Verfahrensstufe allein oder zusammen mit Dialkoxysilanen in Gegenwart von Kondensationskatalysatoren, wie Metallsalzen oder Aminen, polykondensiert werden (vgl. EP-A2-205 096). Hierbei werden zuerst die Vinylmonomeren radikalisch polymerisiert und endständig über eine S-Brücke mit dem Dialkoxysilanrest verknüpft und die so gebildeten difunktionellen Silanderivate werden dann polykondensiert oder mit anderen Worten ausgedrückt: Zuerst werden die Seitenketten oder Zähne des kammes ausgebildet, die dann mit der durch Polykondensation entstehenden Hauptkette verbunden werden.

In ähnlicher Weise können Blockcopolymerisate mit Polysiloxansegmenten dadurch erhalten werden, daß in einer 1. Verfahrensstufe beispielsweise Acrylmonomere in Gegenwart von Hydroxyl- oder Carboxylgruppen aufweisenden Mercaptanen radikalisch polymerisiert werden unter Bildung von Prepolymeren, die dann in einer 2. Verfahrensstufe mit bifunktionellen Polysiloxanen in Gegenwart von Kondensationskatalysatoren polykondensiert werden (vgl. EP-A2-235 728).

Bekannt sind ferner Pfropfpolymerisate mit blockartiger Struktur, bei welchen in einer 1. Verfahrensstufe aus jeweils bifunktionellen Polysiloxanen und organischen Homo-oder Copolymeren durch Polykondensation Blockcopolymere hergestellt werden und auf die so erhaltenen Pfropfgrundlagen in einer 2. Verfahrensstufe monomere Acrylverbindungen in Gegenwart von freien Radikale bildenden Initiatoren radikalisch gepfropft werden (vgl. DE-A1-36 06 982).

Schließlich sind Silicon-organische Blockpolymere bekannt, bei welchen in einer 1. Verfahrensstufe Polydiorganosiloxane mit endständigen Si-H-Bindungen mit ausgewählten, aliphatisch ungesättigten organosilylsubstituierten Acrylpinacolen in Gegenwart von Platinkatalysatoren umgesetzt werden. Auf die so gebildeten Siloxan-Vorpolymerisate, die endständig oder entlang der Kette angeordnete Bis-Silylpinacolatreste enthalten, werden dann in einer 2. Verfahrensstufe Vinylmonomere, wie Acrylatverbindungen, thermisch aufpolymerisiert, wobei die Bis-Silylpinacolatreste als freie Radikale bildende Initiatoren wirken und die aufpolymerisierten Acrylatreste über Si-O-Bindungen, die bekanntlich hydrolyseempfindlich sind, mit der Siloxanpfropfgrundlage verbunden werden (vgl. DE-A1-37 07 399).

Nach dem Stand der Technik können monomere Vinylverbindungen, worunter jeweils auch monomere Acrylverbindungen zu verstehen sind, entweder vor der Verknüpfung mit einer Siloxangrundlage radikalisch polymerisiert oder auf eine Siloxangrundlage - ebenfalls radikalisch - aufpolymerisiert werden. Da durch radikalische Polymerisation bekanntlich Polymere mit hohem Molekulargewicht, aber sehr breiter Molekulargewichtsverteilung erhalten werden, bestehen auch die bekannten Produkte aus Gemischen von sehr unterschiedlichen Copolymeren, in welchen Polyorganosiloxane mit kurzkettigen Polyacrylaten Siliconcharakter und Polyorganosiloxane mit langkettigen Polyacrylaten Polyacrylatcharakter haben. Kamm- oder blockartig strukturierte Poly[organo-organosiloxane] mit definierter Anordnung und relativ einheitlicher Kettenlänge der einzelnen Kämme und Blöcke, können auf diese Weise nicht hergestellt werden.

Aufgabe der Erfindung ist es, Poly[organo-organosiloxane] mit kamm- oder blockartiger Struktur zur Verfügung zu stellen, in welchen die einzelnen Kämme und Blöcke in definierter Anordnung mit relativ einheitlicher Kettenlänge vorliegen und über hydrolysebeständige Bindungen mit der Polysiloxangrundlage verknüpft sind, sowie Verfahren zu ihrer Herstellung, bei dem monomere Verbindungen, die in α-Stellung zu einer Carbonyl- oder Nitrilgruppe eine C=C-Doppelbindung aufweisen, auf eine Siloxangrundlage aufpolymerisiert oder diese monomeren Verbindungen zuerst polymerisiert und anschließend mit der Siloxangrundlage verknüpft werden.

Diese Aufgabe wird erfindungsgemäß durch modifizierte Poly[organo-organosiloxane] mit kamm- oder blockartiger Struktur gelöst, die aus einer im wesentlichen linearen Diorganopolysiloxangrundlage mit endständig und/oder entlang der Kette angeordneten organischen Polymereinheiten bestehen, die durch Polymerisation von polaren Verbindungen, die in α-Stellung zu einer Carbonyl- oder Nitrilgruppe eine C=C-Doppelbindung aufweisen, auf eine mit Trialkylsilylacetoxyalkylgruppen modifizierte Polyorganosiloxangrundlage oder durch Addition von mit endständigen Acetoxyalkenylgruppen modifizierten polymeren Acrylverbindungen an eine Polyorgano-H-siloxangrundlage hergestellt worden sind, derart, daß die organischen Polymereinheiten mit der Polysiloxangrundlage jeweils über SiC-Bindungen verknüpft sind.

Diese modifizierten Poly[organo-organopolysiloxane] können durch Polymerisation von Polyorganosiloxanen und polaren Verbindungen in Gegenwart von Katalysatoren dadurch hergestellt werden, daß in einer 1. Verfahrensstufe (a) an Polyorgano-H-siloxane in Gegenwart von Metallkatalysatoren Trialkylsilylessigsäurealkenylester addiert und auf die so erhaltenen, mit Trialkylsilylacetoxyalkylgruppen modifizierten Polyorganosiloxane in einer 2. Verfahrensstufe (b) polare Verbindungen, die in α-Stellung zu einer Carbonyl- oder Nitrilgruppe eine C=C-Doppelbindung aufweisen, in Gegenwart von nukleophilen oder elektrophilen Katalysatoren aufpolymerisiert werden oder in einer 1. Verfahrensstufe (c) polare Verbindungen, die in α-Stellung zu einer Carbonyl- oder Nitrilgruppe eine C=C-Doppelbindung aufweisen, in Gegenwart von nukleophilen oder elektrophilen Katalysatoren mit Trialkylsilylessigsäurealkenylester polymerisiert und die so erhaltenen, mit endständigen Acetoxyalkenylgruppen modifizierten polymeren Acrylverbindungen in einer 2. Verfahrensstufe (d) an Polyorgano-H-siloxane in Gegenwart von Metallkatalysatoren addiert werden.

Als Ausgangsmaterial für die in der 1. Verfahrensstufe (a) bzw. in der 2. Verfahrensstufe (d) zur Herstellung der Polyorganosiloxangrundlage verwendeten Polyorgano-H-siloxane werden vorteilhaft handelsübliche Polydiorgano-H-siloxane eingesetzt mit Viskositäten im Bereich von 10 bis 1.000.000 m²/s und mit einem Gesamtgehalt an Si-gebundenen H-Atomen im Bereich von 0,01 bis 2,5 Gew.-%, wobei die einzelnen H-Atome endständig und/oder entlang der Kette angeordnet sein können.

Beispiele für organische Reste in diesen Polydiorgano-H-siloxanen, die gleich oder verschieden sein können, sin Alkylreste mit 1 bis 18 C-Atomen, vorzugsweise 1 bis 4 C-Atomen, die geradkettig oder verzweigt sein können, wie Methyl-, Ethyl-, n-Propyl-, iso-Propyl- und n-Butylreste; Cycloalkylreste, wie Cyclopentyl- und Cyclohexylreste; Arylreste, wie Phenyl-, Tolyl-, Xylyl- und Naphthylreste; und Aralkylreste, wie der Benzylrest. Aufgrund der leichteren Zugänglichkeit sind Methyl- und Phenylreste besonders bevorzugt.

Als Trialkylsilylessigsäurealkenylester werden vorteilhaft solche der allgemeinen Formel

R₃Si-CH₂-CO-O-(CH₂)ₙ-CH=CH₂

eingesetzt, worin R Alkylreste mit 1 bis 5 C-Atomen, vorzugsweise Methylreste, sind, und n eine ganze Zahl von 1 bis 9, vorzugsweise 1, ist.

Beispiele hierfür sind Trimethylsilylessigsäureallylester und Trimethylsilylessigsäure-10-undecenylester. Derartige Verbindungen sind neu, und sie können beispielsweise aus den entsprechenden Essigsäurealkenylestern und Trialkylsilylestern der Trifluormethansulfonsäure in Gegenwart von starken Basen unter wasserfreien Bedingungen erhalten werden.

Als polare Verbindungen, die in der 2. Verfahrensstufe (b) auf die Polyorganosiloxangrundlage aufpolymerisiert oder in der 1. Verfahrensstufe (c) polymerisiert werden, können, wie bereits erwähnt, insbesondere Acrylsäurederivate beliebiger Art eingesetzt werden, wie Ester, Amide und Nitrile von Acrylsäure und Methacrylsäure. Beispiele hierfür sind insbesondere Acrylsäureester, wie Acrylsäure-n-butyl- ester und Acrylsäure-2-ethyl-hexylester; Methacrylsäure-ester, wie Methacrylsäure-methylester, Methacrylsäure-ethylester, Methacrylsäure-n-butylester, Methacrylsäure-cyclohexylester, Methacrylsäure-dodecylester und Methacrylsäure-tetradecylester.

Die Durchführung der Additionsreaktion in der 1. Verfahrensstufe (a) oder in der 2. Verfahrensstufe (d) kann in an sich bekannter Weise in Gegenwart eines aprotischen Lösungsmittels, wie Toluol, bei Temperaturen im Bereich von +20°C bis +140°C, vorzugsweise +50°C bis + 100°C, unter Ausschluß von Feuchtigkeit und in Gegenwart eines Metallkatalysators, vorgenommen werden.

Als Metallkatalysatoren, welche die Addition der Si-gebundenen H-Atome in den Polyorgano-H-siloxanen an die Alkenylgruppen in den Trialkylylsilylessigsäurealkenylestern gemäß Verfahren 1 (a) oder an die Alkenylgruppen in den mit Acetoxyalkenylgruppen modifizierten polymeren Acrylverbindungen gemäß Verfahren 2 (d) beschleunigen, können Metalle der 8. Gruppe des Periodischen Systems verwendet werden, die üblicherweise in Form von Metallen per se auf Trägersubstanzen, als Metallverbindungen oder Metallkomplexverbindungen für derartige Additionsreaktionen bekannt sind, wobei sich Platin und Rhodiumkomplexverbindungen besonders bewährt haben.

Die so gemäß Verfahren 1 (a) hergestellten, mit Trialkylsilylacetoxyalkylgruppen modifizierten Polyorganosiloxane entsprechen vorzugsweise der allgemeinen Formel

X(R')₂SiO[Si(R')₂O]_{y}[Si(R')(X)O]_{z}Si(R')₂X

worin
- R' =: Alkylreste mit 1 bis 18 C-Atomen, Cycloalkyl-, Aryl- oder Aralkylreste,
- X =: (CH₂)ₙ₊₂OCOCH₂SiR₃
- R =: Alkylreste mit 1 bis 5 C-Atomen;
- n =: ganze Zahl von 1 bis 9 und
- y und z: Werte von jeweils 1 bis 20.000 haben.

Die in der 2. Verfahrensstufe (b) vorzunehmende Polymerisation der polaren Verbindungen auf die in der 1. Verfahrensstufe (a) hergestellten mit Trialkylsilylacetoxyalkylgruppen modifizierten Polyorganosiloxangrundlagen beziehungsweise die in der 1. Verfahrensstufe (c) vorzunehmende Polymerisation der polaren Verbindungen mit Trialkylsilylessigsäurealkenylestern erfolgt nach dem Prinzip der Gruppentransfer-Polymerisation in Gegenwart von nukleophilen oder elektrophilen Katalysatoren.

Die so gemäß Verfahren 1 (c) hergestellten, mit endständigen Acetoxyalkenylgruppen modifizierten polymeren Acrylverbindungen entsprechen vorzugsweise der allgemeinen Formel

CH₂=CH-(CH₂)ₙ-O-CO-CH₂[CH₂C(Y) (R˝)]_{y}H

worin
- Y =: CN, CONR′₂ oder COOR′;
- R′ =: Alkylreste mit 1 bis 18 C-Atomen, Cycloalkyl-, Aryl- oder Aralkylreste;
- R˝ =: H oder CH₃;
- n =: ganze Zahl von 1 bis 9 und
- y =: 1 bis 20.000.

Bei der bekannten Gruppentransfer-Polymerisation werden polare α-, β- ungesättigte Verbindungen in Gegenwart bestimmter Initiatoren in Verbindung mit nukleophilen oder elektrophilen Katalysatoren polymerisiert (vgl. K.E. Piejko in "Methoden der organischen Chemie" (Houben-Weyl) - Makromolekulare Stoffe Bd. E 20 (1987), S. 153 - 160).

Für die Durchführung des erfindungsgemäßen Verfahrens dienen die nach 1 (a) hergestellten mit den Trialkylsilylacetoxyalkylgruppen modifizierten Polyorganosiloxangrundlagen als polyfunktionelle polymere Initiatoren, deren Polyfunktionalität durch Anzahl und Anordnung der ursprünglich vorhandenen H-Atome in den Polyorgano-H-Siloxanen festgelegt ist, die in der 1. Verfahrensstufe (a) an die ausgewählten Trialkylsilylverbindungen addiert worden sind und durch welche demnach in gleicher Weise die Anzahl und Anordnung der auf die Siloxangrundlage aufpolymerisierten organischen Polymerketten in der 2. Verfahrensstufe (b) bestimmt werden. Mit anderen Worten ausgedrückt: Bei endständiger Anordnung der ursprünglich vorhandenen H-Atome in den Polyorgano-H-Siloxanen werden Blockpolymere der Anordnung ABA gebildet, wobei A die polymeren organischen Blöcke und B die Polyorganosiloxangrundlage darstellt, und bei Anordnung der ursprünglich vorhandenen H-Atome entlang der Kette in den Polyorgano-H-Siloxanen werden Kammpolymere gebildet, wobei die polymeren organischen Ketten als "Zähne" auf die Polyorganosiloxangrundlage aufpolymerisiert werden.

In entsprechender Weise dienen die Trialkylsilylessigsäurealkenylester als monofunktionelle Initiatoren für die Herstellung der mit endständigen Actoxyalkenylgruppen modifizierten polymeren Verbindungen gemäß Verfahren 1 (c). Anzahl und Anordnung dieser modifizierten polymeren Verbindungen auf der Polyorganosiloxangrundlage sind dann durch Anzahl und Anordnung der vorhandenen H-Atome in den Polyorgano-H-siloxanen festgelegt, an welche sid gemäß Verfahren 2 (d) addiert werden. In diesem Falle werden die polymeren Acrylverbindungen zuerst gebildet und dann als endständige Blöcke oder als "Zähne" entlang der Kette mit der Polysiloxangrundlage verknüpft.

Für die Durchführung der Polymerisationsreaktion in der 2. Verfahrensstufe (b) bzw. in der 1. Verfahrensstufe (c) werden die Verbindungen mit den Initiatorgruppen zusammen mit nukleophilen oder elektrophilen Katalysatoren umgesetzt. Derartige Katalysatoren für die Gruppentransfer-Polymerisation sind bekannt und beispielsweise in der US-A-4 508 880 beschrieben. Tetrabutylammoniumfluorid und Tetrabutylammoniumcyanid haben sich dabei besonders bewährt.

Das Molverhältnis Initiatorgruppen:Katalysator kann im Bereich von 10.000:1 bis 1:1 liegen. Vorzugsweise liegt es im Bereich von 100-10:1 und insbesondere im Bereich von 50-1:1.

Das Polymerisationsverfahren selbst kann bei Temperaturen im Bereich von -80°C bis +100°C, vorzugsweise im Bereich von +20°C bis +80°C, durchgeführt werden. Entscheidend ist hierbei, daß unter Ausschluß von Feuchtigkeit gearbeitet wird, was üblicherweise mit Hilfe Inertgasatmosphäre, wie Argon oder Stickstoff oder mit trockener Luft, erreicht werden kann. Die Polymerisation kann ohne oder in Gegenwart eines aprotischen Lösungsmittels als Lösungs-, Fällungs-, Suspensions- oder Emulsionspolymerisation diskontinuierlich oder kontinuierlich durchgeführt werden. Als Lösungsmittel werden dabei vorteilhaft solche ausgewählt, in welchen sowohl die eingesetzten Monomeren als auch Initiator und Katalysator bei der vorgesehenen Reaktionstemperatur ausreichend löslich sind. Beispiele für derartige aprotische Lösungsmittel sind Methylacetat, Ethylacetat, Butylacetat, Acetonitril, Toluol, Xylol, N,N-Dimethylformamid, N-Methylpyrrolidon, Tetrahydrofuran, tert.-Butylmethylether und Siliconöle, worunter insbesondere Polydimethylsiloxanöle und Polymethylphenylsiloxanöle mit Viskositäten im Bereich von etwa 5 - 500 mPa.s/25°C zu verstehen sind.

Bei Durchführung des Polymerisationsverfahrens werden vorteilhaft Verbindungen mit den Initiatorgruppen und Katalysator vorgelegt und die Monomeren mit oder ohne Lösungsmittel zudosiert. Katalysator und Monomere können jedoch auch getrennt zugegeben werden. Außerdem können verschiedene Monomere gleichzeitig oder nacheinander zugegeben werden. Durch mechanische Bewegung kann die gute Verteilung der Monomere unterstützt und durch Kühlung dafür gesorgt werden, daß die vorgesehene Temperatur der exotherm verlaufenden Reaktion nicht überschritten wird. Nachdem die zugegebenen Monomeren verbraucht worden sind, kommt die Polymerisationsreaktion zum Stillstand. Im Reaktionsgefäß liegen jedoch lebende Polymere vor, die auch nach dem Verbrauch der Monomere noch aktiv sind. Diese können durch Zugabe von Kettenabbruchreagenzien, wie Ethanol oder von sogenannten Kupplungsmitteln in inaktive Polymere umgewandelt werden.

Unabhängig von dem Verfahren, das im Einzelfall angewendet worden ist (1 (a) + 2 (b) oder 1 (c) + 2 (d)) sind die so erhaltenen Endprodukte, das sind die Poly[organo-organosiloxane] mit Block- oder Kammstruktur, praktisch transparent, was als Beweis für eine einheitliche Polymerisation angesehen werden kann. In diesen Endprodukten ist die Anordnung und Anzahl der polymeren organischen Blöcke und Ketten durch die ursprünglich vorhandenen H-Atome in den Polyorgano-H-Siloxanen festgelegt, wie oben bereits ausführlich dargelegt, die Länge der einzelnen Blöcke und Ketten wird hingegen durch die zugefügte Menge an Monomeren pro Initiatorgruppe bestimmt, da unter den Bedingungen der Gruppentransfer-Polymerisation üblicherweise keine Kettenübertragung stattfindet. Diese Endprodukte mit praktisch einheitlicher Kettenlänge der auf die Polysiloxangrundlage aufpolymerisierten polaren Monomere bzw. an die Polysiloxangrundlage addierten polymeren Verbindungen können für die Herstellung von Elastomeren auf Diorganopolysiloxangrundlage und als Verträglichkeits-Vermittler für Organopolysiloxane und Poly(meth)-acrylate, die normalerweise nicht mischbar sind, verwendet werden.

In den folgenden Beispielen wurden die Polymerisationsreaktionen jeweils unter Argon als Inertgasatmosphäre bzw. trockener Luft durchgeführt, wenn nichts anderes angegeben ist. Die verwendeten Lösungsmittel wurden nach bekanntem Verfahren getrocknet und die Monomeren durch Filtration über Aluminiumoxid gereinigt.

Die Herstellung der wasserfreien Lösung von Tetrabutylammoniumfluorid in Tetrahydrofuran bzw. Toluol erfolgte in bekannter Weise mittels Calciumhydrid. Die polymeren Endprodukte wurden NMR-spektroskopisch (¹H-NMR) sowie gaschromatographisch (GPC) charakterisiert. H-Siloxane aus der technischen Fertigung wurden direkt ohne zusätzliche Reinigung eingesetzt.

### Beispiel 1:

### Herstellung von Trimethylsilylessigsäure-allylester:

In 100 g (1 Mol) Essigsäure-allylester gelöst in 200 ml wasserfreiem Diethylether wurde unter Kühlung eine Lösung aus 57,8 g (260 mmol) Trifluormethansulfonsäuretrimethylsilylester und 26,3 g (260 mmol) Triethylamin in 200 ml wasserfreiem Diethylether unter kräftigem Rühren tropfenweise eingetragen unter Aufrechterhaltung der Reaktionstemperatur von +5°C. Nach beendeter Zugabe wurde die Mischung unter Rühren auf Raumtemperatur erwärmt und 2 Stunden weitergerührt. Anschließend wurde die Reaktionsmischung zweimal mit Wasser und dann mit 2 Gew.-%-iger Natriumhydrogencarbonatlösung gewaschen. Die organische Phase wurde über Natriumsulfat getrocknet und anschließend bei einem Druck von 2 kPa fraktioniert.
Ausbeute: 30,5g (68 % der Theorie);
Siedepunkt _{2kPa}: 62°C.

### Beispiel 2:

### (a) Herstellung von α,ω-Bis-(3-trimethylsilyl-acetoxypropyl)-polydimethylsiloxan:

100 g von in den endständigen Einheiten je 1 H-Atom aufweisendem Polydimethylsiloxan mit einem mittleren Molekulargewicht von 15.000, gelöst in 100 ml wasserfreiem Toluol, wurden mit 0,345 g (2 mmol) des nach Beispiel 1 hergestellten Trimethylsilylessigsäure-allylesters und 1 mg Platin in Form einer Pt-Komplexverbindung ((acac-C₇H₈)Pt (acac), worin acac den Acetylacetonatrest bedeutet; vgl. DE-A-27 24 822) versetzt und das Gemisch 5 Stunden auf 80°C erhitzt; dann wurde das Lösungsmittel bei 80°C und 100 Pa abgezogen, anschließend wurde überschüssiger Trimethylsilylessigsäureallylester bei 80°C unter 0,1 Pa entfernt.

### (b) Herstellung von Poly-[dimethylsiloxan-g-(butylacrylat - co-allylacrylat)]:

Nach dem Abkühlen des nach Beispiel 2a) hergestellten, mit Trimethylsilylacetoxypropylgruppen modifizierten Polydimethylsiloxans auf 40°C wurde dieses mit 90 g (702 mmol) Acrylsäure-n-butylester, 10 g (90 mmol) Acrylsäure-allylester und 0,25 mmol (1 ml einer 0,25 M Lösung in Tetrahydrofuran) Tetrabutylammoniumfluorid versetzt. Nach wenigen Minuten trat eine exotherme Reaktion ein. Die Mischung wurde 5 Std. auf 60°C erwärmt, wobei ein viskoses, transparentes Block-Copolymer gebildet wurde. Das Produkt wurde durch Entfernen von flüchtigen Verunreinigungen im Hochvakuum gereinigt; es wurde in quantitativer Ausbeute erhalten.

### Beispiel 3:

### Herstellung von Poly[dimethylsiloxan-g-methylacrylat]:

100 g des nach Beispiel 2 (a) hergestellten, mit Trimethylsilyl-acetoxypropylgruppen modifizierten Polydimethylsiloxans wurden in 100 g Acrylsäuremethylester gelöst. Die Lösung wurde auf 60°C erwärmt und mit 1 ml einer 0,25 M Tetrabutylammoniumfluoridlösung in Tetrahydrofuran versetzt. Nach wenigen Minuten trat eine leicht exotherme Reaktion ein. Die Reaktionsmischung wurde 5 Stunden bei 60°C gehalten, dann wurden flüchtige Bestandteile im Hochvakuum entfernt.

Es wurden 198 g (98 % der Theorie, bezogen auf eingesetztes Acrylat) eines viskosen, transparenten Blockpolymeren erhalten.

### Beispiel 4:

### Herstellung von Poly[dimethylsiloxan-g-methyl-methacrylat]:

100 g des nach Beispiel 2 (a) hergestellten, mit Trimethylsilyl-acetoxypropylgruppen modifizierten Polydimethylsiloxans wurden in 100 g (1 mol) Methacrylsäuremethylester gelöst, die Lösung auf 60°C erwärmt und mit 1 ml einer 0,25 M Tetrabutylammoniumfluoridlösung in Tetrahydrofuran versetzt. Unter gleichen Bedingungen (Reaktionszeit, Aufarbeitung) wie in Beispiel 3 beschrieben wurde in quantitativer Ausbeute ein standfestes, opakes Blockpolymer erhalten.

### Beispiel 5:

### (c) Herstellung von Polybutylacrylat mit endständigen Acetoxyallylgruppen:

Zu einer Lösung von 7,13 g (41,4 mmol) Trimethylsilylessigsäure-allylester in 500 ml trockenem tert. Butyl-methylether wurden 1,25 mmol (5 ml einer 0,25 M Lösung in Tetrahydrofuran) Tetrabutylammoniumfluorid gegeben und anschließend, innerhalb einer Stunde, unter Kühlung 450 g (3,515 mmol) Acrylsäure-n-butylester zudosiert. In Abständen von 20 min. wurden jeweils 0,1 mmol (0,4 ml einer 0,25 M Lösung in Tetrahydrofuran) Tetrabutylammoniumfluorid zugegeben. Nach beendeter Monomerzugabe wurde das Reaktionsgemisch 3 Stunden zum Nachreagieren stehen gelassen. Dann wurde das Polymer durch Zugabe von 500 ml eines Methanol-Gemisches (9:1/v:v) ausgefällt. Das Lösungsmittelgemisch wurde abdekantiert und das viskose Polymer bei 70°C im Vakuum getrocknet.
Ausbeute: 372,5 g (83 % der Theorie)
Molekulargewicht (Endgruppenbestimmung durch NMR): 15 000

### (d) Herstellung von Poly-[dimethylsiloxan-g-butylacrylat]:

200 g des nach Beispiel 5 (c) hergestellen Polybutylacrylates wurden in 200 ml trockenem Toluol gelöst und die Lösung auf 90°- 95°C erwärmt. Nach Zugabe von 4 mg Di-µ-chloro-bis[1,5-hexadien-rhodium(I)] wurden, unter kräftiger mechanischer Durchmischung, 100 g eines in den endständigen Einheiten je 1 H-Atom aufweisenden Polydimethylsiloxans mit einem mittleren Molekulargewicht von 15 000 innerhalb von 2 Stunden zugegeben. Die Reaktionsmischung wurde weitere 16 Stunden bei 90°- 95°C gehalten. Anschließend wurde das Lösungsmittel bei 80°C und 10 Pa entfernt.
Ausbeute quantitativ eines gelchromatographisch einheitlichen Produktes.

### Beispiel 6:

### (c) Herstellung von Polyhexylmethacrylat mit endständigen Acetoxyallylgruppen:

Unter gleichen Bedingungen wie in Beispiel 5 (c) beschrieben wurden 510 g (3 mol) n-Hexylmethacrylat mit 4,45 g (25,8 mmol) Trimethylsilylessigsäure-allylester als Initiator und 1,25 mmol Tetrabutylammoniumfluorid als Katalysator polymerisiert.
Ausbeute: 486 g (95,3 % der Theorie)
Molekulargewicht (Endgruppenbestimmung durch NMR) 58 000

### (d) Herstellung von Poly-[dimethylsiloxan-g-hexylmethacrylat]:

Unter gleichen Bedingungen wie in Beispiel 5 (d) beschrieben wurden 200 g des nach Beispiel 6 (c) hergestellten Polyhexylmethacrylates mit 26 g eines in den endständigen Einheiten je 1 H-Atom aufweisenden Polydimethylsiloxans, mit einem mittleren Molekulargewicht von 15 000, umgesetzt. Als Katalysator wurden 4 mg Di-µ-chloro-bis[1,5-hexadien-rhodium(I)] eingesetzt.
Ausbeute quantitativ weißes, elastisches, gelchromatographisch einheitliches Polymer.

## Patentansprüche (Patentansprüche für folgende(n) Vertragsstaat(en): BE, DE, FR, GB, NL)

1. Modifizierte Poly[organo-organosiloxane] mit kamm- und/oder blockartiger Struktur, die aus einer im wesentlichen linearen Diorganopolysiloxangrundlage mit endständig und/oder entlang der Kette angeordneten organischen Polymereinheiten bestehen, die durch Polymerisation von polaren Verbindungen, die in α-Stellung zu einer Carbonyl- oder Nitrilgruppe eine C=C-Doppelbindung aufweisen, auf eine mit Trialkylsilylacetoxyalkylgruppen modifizierte Polyorganosiloxangrundlage oder durch Addition von mit endständigen Acetoxyalkenylgruppen modifizierten polymeren Acrylverbindungen an eine Polyorgano-H-siloxangrundlage hergestellt worden sind, derart, daß die organischen Polymereinheiten mit der Polysiloxangrundlage jeweils über Si-C-Bindungen verknüpft sind.

2. Verfahren zur Herstellung der modifizierten Poly[organo-organosiloxane] gemäß Anspruch 1 durch Polymerisation von Polyorganosiloxanen und polaren Verbindungen in Gegenwart von Katalysatoren, dadurch gekennzeichnet, daß in einer 1. Verfahrensstufe
(a) an Polyorgano-H-Siloxane in Gegenwart von Metall-Katalysatoren Trialkylsilylessigsäurealkenylester addiert und auf die so erhaltenen, mit Trialkylsilylacetoxyalkylgruppen modifizierten Polyorganosiloxane in einer 2. Verfahrensstufe
(b) polare Verbindungen, die in α-Stellung zu einer Carbonyl- oder Nitrilgruppe eine C=C-Doppelbindung aufweisen in Gegenwart von nukleophilen oder elektrophilen Katalysatoren aufpolymerisiert werden
oder in einer 1. Verfahrensstufe
(c) polare Verbindungen, die in α-Stellung zu einer Carbonyl- oder Nitrilgruppe eine C=C-Doppelbindung aufweisen in Gegenwart von nukleophilen oder elektrophilen Katalysatoren mit Trialkylsilylessigsäurealkenylester polymerisiert und die so erhaltenen, mit endständigen Acetoxyalkenylgruppen modifizierten polymeren Acrylverbindungen in einer 2. Verfahrensstufe
(d) an Polyorgano-H-siloxane in Gegenwart von Metallkatalysatoren addiert werden.

3. Verfahren nach Anspruch 2, dadurch gekennzeichnet, daß in der Verfahrensstufe (a) oder (d) Polydiorgano-H-Siloxane mit Viskositäten im Bereich von 10 bis 1.000.000 m²/s und mit einem Gesamtgehalt an Si-gebundenen H-Atomen im Bereich von 0,01 bis 2,5 Gew.-%, wobei die einzelnen H-Atome endständig oder entlang der Kette angeordnet sein können, eingesetzt werden.

4. Verfahren nach Anspruch 2, dadurch gekennzeichnet, daß in der Verfahrensstufe (a) oder (c) Trialkylsilylessigsäurealkenylester der allgemeinen Formel
R₃Si-CH₂-CO-O-(CH₂)ₙ-CH=CH₂
worin
R = Alkylrest mit 1 bis 5 C-Atomen und
n = ganze Zahl von 1 bis 9
eingesetzt werden.

5. Mit Trialkylsilylacetoxyalkylgruppen modifizierte Polyorganosiloxane der allgemeinen Formel
X(R′)₂SiO[Si(R′)₂O]_{y}[Si(R′) (X)O]_{z}Si(R′)₂X
worin
R′ = Alkylrest mit 1 bis 18 C-Atomen, Cycloalkyl-, Aryl- oder Aralkylreste;
X = (CH₂)ₙ₊₂OCOCH₂SiR₃;
R = Alkylreste mit 1 bis 5 C-Atomen;
n = ganze Zahl von 1 bis 9 und
y und z Werte von jeweils 1 bis 20.000 haben.

6. Mit endständigen Acetoxyalkenylgruppen modifizierte polymere Acrylverbindungen der allgemeinen Formel
CH₂=CH-(CH₂)ₙ-O-CO-CH₂[CH₂C(Y) (R˝)]_{y}H
worin
Y = CN, CONR′₂ oder COOR′;
R′ = Alkylreste mit 1 bis 18 C-Atomen, Cycloalkyl-, Aryl- oder Aralkylreste;
R˝ = H oder C₃;
n = ganze Zahl von 1 bis 9 und
y = 1 bis 20.000.

## Patentansprüche (Patentansprüche für folgende(n) Vertragsstaat(en): ES)

1. Verfahren zur Herstellung von modifizierten Poly[organo-organosiloxanen] mit kamm- und/oder blockartiger Struktur, die aus einer im wesentlichen linearen Diorganopolysiloxangrundlage mit endständig und/oder entlang der Kette angeordneten organischen Polymereinheiten bestehen, durch Polymerisation von polaren Verbindungen, die in α-Stellung zu einer Carbonyl- oder Nitrilgruppe eine C=C-Doppelbindung aufweisen, auf eine mit Trialkylsilylacetoxyalkylgruppen modifizierte Polyorganosiloxangrundlage oder durch Addition von mit endständigen Acetoxyalkenylgruppen modifizierten polymeren Acrylverbindungen an eine Polyorgano-H-siloxangrundlage, derart, daß die organischen Polymereinheiten mit der Polysiloxangrundlage jeweils über Si-C-Bindungen verknüpft werden,
dadurch gekennzeichnet, daß
in einer 1. Verfahrensstufe
(a) an Polyorgano-H-Siloxane in Gegenwart von Metall-Katalysatoren Trialkylsilylessigsäurealkenylester addiert und auf die so erhaltenen, mit Trialkylsilylacetoxyalkylgruppen modifizierten Polyorganosiloxane in einer 2. Verfahrensstufe
(b) polare Verbindungen, die in α-Stellung zu einer Carbonyl- oder Nitrilgruppe eine C=C-Doppelbindung aufweisen in Gegenwart von nukleophilen oder elektrophilen Katalysatoren aufpolymerisiert werden
oder in einer 1. Verfahrensstufe
(c) polare Verbindungen, die in α-Stellung zu einer Carbonyl- oder Nitrilgruppe eine C=C-Doppelbindung aufweisen in Gegenwart von nukleophilen oder elektrophilen Katalysatoren mit Trialkylsilylessigsäurealkenylester polymerisiert und die so erhaltenen, mit endständigen Acetoxyalkenylgruppen modifizierten polymeren Acrylverbindungen in einer 2. Verfahrensstufe
(d) an Polyorgano-H-siloxane in Gegenwart von Metallkatalysatoren addiert werden.

2. Verfahren nach Anspruch 1, dadurch gekennzeichnet, daß in der Verfahrensstufe (a) oder (d) Polydiorgano-H-Siloxane mit Viskositäten im Bereich von 10 bis 1.000.000 m²/s und mit einem Gesamtgehalt an Si-gebundenen H-Atomen im Bereich von 0,01 bis 2,5 Gew.-%, wobei die einzelnen H-Atome endständig oder entlang der Kette angeordnet sein können, eingesetzt werden.

3. Verfahren nach Anspruch 1, dadurch gekennzeichnet, daß in der Verfahrensstufe (a) oder (c) Trialkylsilylessigsäurealkenylester der allgemeinen Formel
R₃Si-CH₂-CO-O-(CH₂)ₙ-CH=CH₂
worin
R = Alkylreste mit 1 bis 5 C-Atomen und
n = ganze Zahl von 1 bis 9
eingesetzt werden.

4. Verfahren nach Anspruch 1, dadurch gekennzeichnet, daß in der Verfahrensstufe (a) hergestellte, mit Trialkylsilylacetoxyalkylgruppen modifizierte Polyorganosiloxane der allgemeinen Formel
X(R')₂SiO[Si(R')₂O]_{y}[Si(R')(X)O]_{z}Si(R')₂X
worin
R' = Alkylreste mit 1 bis 18 C-Atomen, Cycloalkyl-, Aryl- oder Aralkylreste;
X = (CH₂)ₙ₊₂OCOCH₂SiR₃;
R = Alkylreste mit 1 bis 5 C-Atomen;
n = ganze Zahl von 1 bis 9 und
y und z Werte von jeweils 1 bis 20.000 haben,
in der Verfahrensstufe (b) eingesetzt werden.

5. Verfahren nach Anspruch 1, dadurch gekennzeichnet, daß in der Verfahrensstufe (c) hergestellte, mit endständigen Acetoxyalkenylgruppen modifizierte polymere Acrylverbindungen der allgemeinen Formel
CH₂=CH-(CH₂)ₙ-O-CO-CH₂[CH₂C(Y)(R'')]_{y}H
worin
Y = CN, CONR'₂ oder COOR';
R' = Alkylreste mit 1 bis 18 C-Atomen, Cycloalkyl-, Aryl- oder Aralkylreste;
R''= H oder CH₃;
n = ganze Zahl von 1 bis 9 und
y = 1 bis 20.000,
in der Verfahrensstufe (d) eingesetzt werden.

## Claims (Claims for the following Contracting State(s): BE, DE, FR, GB, NL)

1. Modified poly[organo-organosiloxanes] with comb and/or block structure which consists of a substantially linear diorganopolysiloxane base with organic polymer units arranged in terminal positions and/or along the chain, which has been prepared by polymerization of polar compounds which have a C=C double bond in the α-position relative to a carbonyl group or a nitrile group onto a polyorganosiloxane base modified with trialkylsilylacetoxyalkyl groups or by addition of polymeric acrylic compounds modified with terminal acetoxyalkenyl groups to a polyorgano-H-siloxane base in such a way that the organic polymer units are in each case linked to the polysiloxane base via Si-C bonds.

2. Process for the preparation of the modified poly[organo-organosiloxanes] according to Claim 1 by polymerization of polyorganosiloxanes and polar compounds in the presence of catalysts characterized in that in a 1st process step
(a) alkenyl trialkylsilylacetate adds to polyorgano-H-siloxanes in the presence of metal catalysts and in a 2nd process step
(b) polar compounds which have a C=C double bond in the α-position relative to a carbonyl group or nitrile group are graft copolymerised onto the polyorganosiloxanes modified with trialkylsilylacetoxyalkyl groups thus obtained in the presence of nucleophilic or electrophilic catalysts or in a 1st process step
(c) polar compounds which have a C=C double bond in the α-position relative to a carbonyl group or nitrile group are polymerized with alkenyl trialkylsilylacetate in the presence of nucleophilic or electrophilic catalysts and the polymeric acrylic compounds modified with terminal acetoxyalkenyl groups obtained in this way are added in a 2nd process step
(d) to polyorgano-H-siloxanes in the presence of metal catalysts.

3. Process according to Claim 2, characterized in that in process step (a) or (d) polydiorgano-H-siloxanes with viscosities in the range from 10 to 1,000,000 m²/s and with a total content of H atoms bound to Si in the region of 0.01 to 2.5% by weight, it being possible for the individual H atoms to be arranged in terminal positions or along the chain, are used.

4. Process according to Claim 2, characterized in that in process step (a) or (c) alkenyl trialkylsilyl acetate of the general formula
R₃Si-CH₂-CO-O-(CH₂)ₙ-CH=CH₂
in which
R = alkyl radicals with 1 to 5 carbon atoms and
n = an integer from 1 to 9,
are used.

5. Polyorganosiloxanes modified with trialkylsilylacetoxyalkyl groups, of the general formula
X(R')₂SiO[Si(R')₂O]_{y}[Si(R')(X)O]_{z}Si(R')₂X
in which
R' = alkyl radicals with 1 to 18 carbon atoms, cycloalkyl, aryl or aralkyl radicals;
X = (CH₂)ₙ₊₂OCOCH₂SiR₃;
R = alkyl radicals with 1 to 5 carbon atoms;
n = an integer from 1 to 9 and
y and z have values in each case from 1 to 20,000.

6. Polymeric acrylic compounds modified with terminal acetoxyalkenyl groups, of the general formula
CH₂=CH-(CH₂)ₙ-O-CO-CH₂[CH₂C(Y)(R'')]_{y}H
in which
Y = CN, CONR'₂ or COOR';
R' = alkyl radicals with 1 to 18 carbon atoms, cycloalkyl, aryl or aralkyl radicals;
R'' = H or CH₃;
n = an integer from 1 to 9 and
y = 1 to 20,000.

## Claims (Claims for the following Contracting State(s): ES)

1. Process for the preparation of modified poly[organo-organosiloxanes] with comb and/or block structure which consists of a substantially linear diorganopolysiloxane base with organic polymer units arranged in terminal positions and/or along the chain, by polymerization of polar compounds which have a C=C double bond in the α-position relative to a carbonyl group or a nitrile group onto a polyorganosiloxane base modified with trialkylsilylacetoxyalkyl groups or by addition of polymeric acrylic compounds modified with terminal acetoxyalkenyl groups to a polyorgano-H-siloxane base in such a way that the organic polymer units are in each case linked to the polysiloxane base via Si-C bonds, characterized in that in a 1st process step
(a) alkenyl trialkylsilylacetate adds to polyorgano-H-siloxanes in the presence of metal catalysts and in a 2nd process step
(b) polar compounds which have a C=C double bond in the α-position relative to a carbonyl group or nitrile group are graft copolymerized onto the polyorganosiloxanes modified with trialkylsilylacetoxyalkyl groups thus obtained in the presence of nucleophilic or electrophilic catalysts or in a 1st process step
(c) polar compounds which have a C=C double bond in the α-position relative to a carbonyl group or nitrile group are polymerized with alkenyl trialkylsilylacetate in the presence of nucleophilic or electrophilic catalysts and the polymeric acrylic compounds modified with terminal acetoxyalkenyl groups obtained in this way are added in a 2nd process step
(d) to polyorgano-H-siloxanes in the presence of metal catalysts.

2. Process according to Claim 1, characterized in that in process step (a) or (d) polydiorgano-H-siloxanes with viscosities in the range from 10 to 1,000,000 m²/s and with a total content of H atoms bound to Si in the region of 0.01 to 2.5% by weight, it being possible for the individual H atoms to be arranged in terminal positions or along the chain, are used.

3. Process according to Claim 1, characterized in that in process step (a) or (c) alkenyl trialkylsilyl acetate of the general formula
R₃Si-CH₂-CO-O-(CH₂)ₙ-CH=CH₂
in which
R = alkyl radicals with 1 to 5 carbon atoms and
n = an integer from 1 to 9,
are used.

4. Process according to Claim 1, characterized in that polyorganosiloxanes, prepared in the process step (a), modified with trialkylsilylacetoxyalkyl groups, of the general formula
X(R')₂SiO[Si(R')₂O]_{y}[Si(R')(X)O]_{z}Si(R')₂X
in which
R' = alkyl radicals with 1 to 18 carbon atoms, cycloalkyl, aryl or aralkyl radicals;
X = (CH₂)ₙ₊₂OCOCH₂SiR₃;
R = alkyl radicals with 1 to 5 carbon atoms;
n = an integer from 1 to 9 and
y and z have values in each case from 1 to 20,000, are used in process step (b).

5. Process according to Claim 1, characterized in that polymeric acrylic compounds, prepared in the process step (c), modified with terminal acetoxyalkenyl groups, of the general formula
CH₂=CH-(CH₂)ₙ-O-CO-CH₂[CH₂C(Y)(R'')]_{y}H
in which
Y = CN, CONR'₂ or COOR';
R' = alkyl radicals with 1 to 18 carbon atoms, cycloalkyl, aryl or aralkyl radicals;
R'' = H or CH₃;
n = an integer from 1 to 9 and
y = 1 to 20,000, are used in process step (d).

## Revendications (Revendications pour l'(les) Etat(s) contractant(s) suivant(s): BE, DE, FR, GB, NL)

1. Poly[organo-organosiloxanes] modifiés à structure en peigne et/ou en blocs qui sont constitués par un diorganopolysiloxane de base essentiellement linéaire ayant des unités polymères organiques disposées en position terminale et/ou le long de la chaîne, qui ont été préparés par polymérisation de composés polaires comportant une double liaison C=C en position α d'un groupe carbonyle ou nitrile sur un polyorganosiloxane de base modifié par des groupes trialkylsilylacétoxyalkyle, ou par addition de composés acryliques polymères modifiés par des groupes acétoxyalcényle en position terminale sur un polyorgano-H-siloxane de base, de façon que les unités polymères organiques soient toujours liées au polysiloxane de base par l'intermédiaire de liaisons SiC.

2. Procédé de préparation des poly[organo-organosiloxanes] modifiés selon la revendication 1 par polymérisation de polyorganosiloxanes et de composés polaires en présence de catalyseurs, caractérisé en ce que, dans une 1ère étape de procédé
(a) on additionne des trialkylsilylacétates d'alcényle sur des polyorgano-H-siloxanes en présence de catalyseurs métalliques et, dans une 2ème étape de procédé
(b) on polymérise sur les polyorganosiloxanes modifiés par des groupes trialkylsilylacétoxyalkyle ainsi obtenus des composés polaires qui comportent une double liaison C=C en position α d'un groupe carbonyle ou nitrile, en présence de catalyseurs nucléophiles ou électrophiles,
ou, dans une 1ère étape de procédé
(c) on polymérise des composés polaires qui comportent une double liaison C=C en position α d'un groupe carbonyle ou nitrile, en présence de catalyseurs nucléophiles ou électrophiles, avec des trialkylsilylacétates d'alcényle, et, dans une 2ème étape de procédé
(d) on additionne les composés acryliques polymères modifiés par des groupes acétoxyalcényle en position terminale ainsi obtenus sur des polyorgano-H-siloxanes en présence de catalyseurs métalliques.

3. Procédé selon la revendication 2, caractérisé en ce que l'on utilise dans l'étape de procédé (a) ou dans l'étape de procédé (d) des polydiorgano-H-siloxanes ayant des viscosités comprises entre 10 et 1 000 000 m²/s et une teneur totale en atomes d'hydrogène liés au Si comprise entre 0,01 et 2,5 % en masse, les atomes d'hydrogène individuels pouvant être disposés en position terminale ou le long de la chaîne.

4. Procédé selon la revendication 2, caractérisé en ce que l'on utilise dans l'étape de procédé (a) ou (c) des trialkylsilylacétates d'alcényle de formule générale
R₃Si-CH₂-CO-O-(CH₂)ₙ-CH=CH₂
dans laquelle
R = des restes alkyle de 1 à 5 atomes de carbone, et
n = un nombre entier de 1 à 9.

5. Polyorganosiloxanes modifiés par des groupes trialkylsilylacétoxyalkyle de formule générale
X(R')₂SiO[Si(R')₂O]_{y}[Si(R')(X)O]_{z}Si(R')₂X
dans laquelle
R' = des restes alkyle de 1 à 18 atomes de carbone, des restes cycloalkyle, aryle ou aralkyle,
X = (CH₂)ₙ₊₂OCOCH₂SiR₃,
R = des restes alkyle de 1 à 5 atomes de carbone;
n = un nombre entier de 1 à 9 et
y et z ont des valeurs comprises entre 1 et 20 000.

6. Composés acryliques polymères modifiés par des groupes acétoxyalcényle terminaux, de formule générale
CH₂=CH-(CH₂)ₙ-O-CO-CH₂[CH₂C(Y)(R'')]_{y}H
dans laquelle
Y = CN, CONR'₂ ou COOR';
R' = des restes alkyle de 1 à 18 atomes de carbone, des restes cycloalkyle, aryle ou aralkyle;
R''=H ou CH₃;
n = un nombre entier de 1 à 9 et
y=1 à 20 000.

## Revendications (Revendications pour l'(les) Etat(s) contractant(s) suivant(s): ES)

1. Procédé de préparation de poly[organo-organosiloxanes] modifiés à structure en peigne et/ou en blocs qui sont constitués par un diorganopolysiloxane de base essentiellement linéaire ayant des unités polymères organiques disposées en position terminale et/ou le long de la chaîne, qui ont été préparés par polymérisation de composés polaires comportant une double liaison C=C en position a d'un groupe carbonyle ou nitrile sur un polyorganosiloxane de base modifié par des groupes trialkylsilylacétoxyalkyle, ou par addition de composés acryliques polymères modifiés par des groupes acétoxyalcényle en position terminale sur un polyorgano-H-siloxane de base, de façon que les unités polymères organiques soient toujours liées au polysiloxane de base par l'intermédiaire de liaisons SiC,
caractérisé en ce que, dans une 1ère étape de procédé
(a) on additionne des trialkylsilylacétates d'alcényle sur des polyorgano-H-siloxanes en présence de catalyseurs métalliques et, dans une 2ème étape de procédé
(b) on polymérise sur les polyorganosiloxanes modifiés par des groupes trialkylsilylacétoxyalkyle ainsi obtenus des composés polaires qui comportent une double liaison C=C en position α d'un groupe carbonyle ou nitrile, en présence de catalyseurs nucléophiles ou électrophiles,
ou, dans une 1ère étape de procédé
(c) on polymérise des composés polaires qui comportent une double liaison C=C en position α d'un groupe carbonyle ou nitrile, en présence de catalyseurs nucléophiles ou électrophiles, avec des trialkylsilylacétates d'alcényle, et, dans une 2ème étape de procédé
(d) on additionne les composés acryliques polymères modifiés par des groupes acétoxyalcényle en position terminale ainsi obtenus sur des polyorgano-H-siloxanes en présence de catalyseurs métalliques.

2. Procédé selon la revendication 1, caractérisé en ce que l'on utilise dans l'étape de procédé (a) ou dans l'étape de procédé (d) des polydiorgano-H-siloxanes ayant des viscosités comprises entre 10 et 1 000 000 m²/s et une teneur totale en atomes d'hydrogène liés au Si comprise entre 0,01 et 2,5 % en masse, les atomes d'hydrogène individuels pouvant être disposés en position terminale ou le long de la chaîne.

3. Procédé selon la revendication 1, caractérisé en ce que l'on utilise dans l'étape de procédé (a) ou (c) des trialkylsilylacétates d'alcényle de formule générale
R₃Si-CH₂-CO-O-(CH₂)ₙ-CH=CH₂
dans laquelle
R = des restes alkyle de 1 à 5 atomes de carbone, et
n = un nombre entier de 1 à 9.

4. Procédé selon la revendication 1, caractérisé en ce que l'on utilise dans l'étape de procédé (b) des polyorganosiloxanes modifiés par des groupes trialkylsilylacétoxyalkyle, préparés dans l'étape de procédé (a), de formule générale
X(R')₂SiO[Si(R')₂O]_{y}[Si(R')(X)O]_{z}Si(R')₂X
dans laquelle
R' = des restes alkyle de 1 à 18 atomes de carbone, des restes cycloalkyle, aryle ou aralkyle,
X = (CH₂)ₙ₊₂OCOCH₂SiR₃,
R = des restes alkyle de 1 à 5 atomes de carbone;
n = un nombre entier de 1 à 9 et
y et z ont des valeurs comprises entre 1 et 20 000.

5. Procédé selon la revendication 1, caractérisé en ce que l'on utilise dans l'étape de procédé (d) des composés acryliques polymères modifiés par des groupes acétoxyalcényle terminaux, préparés dans l'étape de procédé (c), de formule générale
CH₂=CH-(CH₂)ₙ-O-CO-CH₂[CH₂C(Y)(R'')]_{y}H
dans laquelle
Y = CN, CONR'₂ ou COOR';
R' = des restes alkyle de 1 à 18 atomes de carbone, des restes cycloalkyle, aryle ou aralkyle;
R'' = H ou CH₃;
n = un nombre entier de 1 à 9 et
y = 1 à 20 000.
